# EUROPEAN PATENT APPLICATION

(11) **EP 3 910 569 A1**
(43) Date of publication of application: **17.11.2021**
(21) Application number: 20174509.8
(22) Date of filing: 13.05.2020
(51) Int. Cl.: G06Q 10/06

(54) **MANUFACTURING SYSTEM AND METHOD**

(71) Applicant: Pursuit Software Limited, Rackheath, Norfolk NR13 6NW (GB)
(72) Inventor: BURNS, Mike, Rackheath, Norfolk NR13 6NW (GB)
(74) Representative: White, Andrew John

(57) **Abstract**

A manufacturing system for controlling the manufacturing process of a plurality of items is disclosed herein. The system comprises a controller, a network interface and a data structure. The controller is configured to maintain in the data structure a set of data items representing the manufacturing output of a plurality of items from each of a plurality of manufacturing facilities. Each of the plurality of items is represented by a corresponding globally unique product identifier, and each of the plurality of manufacturing facilities is represented by a corresponding globally unique node identifier. The controller is configured to make a determination of a target manufacturing rate based on a consumption attribute and communicate, via the network interface, the corresponding target manufacturing rate attribute to each of the plurality of manufacturing facilities.

## Description

### Field of the invention

The present disclosure relates to a manufacturing system and method, in particular a manufacturing system and method for controlling the manufacturing process of a plurality of items.

### Background

A manufacturing facility may manufacture a plurality of products or items. These items may be supplied to and sold by a plurality of different vendors. The manufacturing of these items may involve the use of a plurality of different raw materials, for example supplied by a number of different suppliers.

Many manufacturing processes these days rely on "just in time" processing. This means that stock is rarely stored for longer than a few days and as such the manufacturing process needs to be tightly aligned with the sale process to ensure that sufficient items are manufactured in time and so that a surplus of items are not manufactured. However, because items manufactured by a manufacturer can be sold by a plurality of different vendors, it can be very difficult to accurately obtain the required information needed to ensure that the manufacturing process performed by the manufacturing facility aligns with sales performed by the plurality of different vendors.

Furthermore, manufacturing facilities may be located at distinct and separate geographical locations, and the vendors may also be located at distinct and separate geographical locations. Accurate and current information relating to the both the manufacturing process of the plurality of geographically distinct manufacturing facilities, and the sales process of the plurality of geographically distinct vendors may enable the manufacture of items in geographical areas proximal to geographical areas where items are manufactured, which will have an obvious improvement and reduction in the carbon footprint of the manufacture and supply process for those items.

Moreover, for certain items, such as in the automotive or medical fields, quality control may be very important. Accurate information relating to e.g. returns or reported failures of items and to which manufacturing facility that item was manufactured in will help to improve quality and help to identify the cause of any fall in quality.

### Summary of the invention

Aspects of the invention are as set out in the independent claims and optional features are set out in the dependent claims. Aspects of the invention may be provided in conjunction with each other and features of one aspect may be applied to other aspects.

In a first aspect of the disclosure there is provided a manufacturing system for controlling the manufacturing process of a plurality of items. The system comprises a controller, a network interface and a data structure. The controller is configured to maintain in the data structure a set of data items representing the manufacturing output of a plurality of items from each of a plurality of manufacturing facilities, wherein each of the plurality of items is represented by a corresponding globally unique product identifier, and each of the plurality of manufacturing facilities is represented by a corresponding globally unique node identifier. The controller is configured to receive via the network interface, from each of a plurality of third parties, a consumption attribute associated with a corresponding globally unique product identifier and associated with a corresponding globally unique vendor identifier, wherein the consumption attribute represents a rate of consumption of the item at a vendor. The controller is configured to make a determination of a target manufacturing rate, for each of the items represented by the globally unique product identifier for each of the plurality of manufacturing facilities represented by a corresponding globally unique node identifier, based on the consumption attribute. The controller is configured to maintain an association between each globally unique product identifier, each globally unique node identifier, and a corresponding target manufacturing rate attribute based on the determined target manufacturing rate for each of the items represented by the globally unique product identifier for each of the plurality of manufacturing facilities. The controller is configured to communicate, via the network interface, the corresponding target manufacturing rate attribute to each of the plurality of manufacturing facilities.

Such a system may allow the manufacturing facility/manufacturer and the vendor to work closely together so that both parties can enjoy, for example, increased sales, so that best performing products can be flagged, so that stock control can be improved, so that new product launches can be monitored for number of sales, sale or return items can be monitored, the system can assist with just in time production of items, and the system can monitor performance of APPRO items in retail stores.

This may enable the following functionality:
- Vendors don't need to over stock;
- Manufacturers can improve their (production) line balancing;
- Manufacturers can more accurately determine the quantity of raw material required;
- Capacity balancing can be improved;
- Inventory can be improved, so funds can be redirected to other investments;
- It would help if stock piling was required;
- Manufacturers may be able to improve the timing and volume of product runs, e.g. if they run it weekly, monthly etc
- Vendors can stock the right lines for their geographical area.

Furthermore, the system may enable any changes in price (e.g. due to fluctuations in raw material costs and/or exchange rates) to be fed through in real-time so that the vendor can sell the product at the correct price and benefit at the earliest stage possible of any changes made by the supplier. Additionally, the system could reduce any physical visits that may be required between representatives of the manufacturer and vendor as there would be a greater transparency of data and hence increased trust between the parties.

In some examples, the controller is configured to maintain, in the data structure, a geographical indication for each globally unique vendor identifier, and a geographical indication for each globally unique node identifier; and the controller is configured to make a determination of a target manufacturing rate for a particular one of the manufacturing facilities based on the consumption attribute and a comparison of the geographical indication of each globally unique vendor identifier and the geographical indication of each globally unique node identifier.

The controller may be configured to determine a new target manufacturing rate based on a change in the received consumption attribute from at least one of the plurality of third parties.

In some examples the controller is configured to maintain, in the data structure, a set of raw material attributes corresponding to at least some of the globally unique product identifiers; and
wherein the controller is configured to maintain in the data structure a set of raw material consumption rate attributes associated with each of the raw material attributes based on the consumption attribute for each corresponding globally unique product identifier;
and wherein the controller is configured maintain in the data structure a set of raw material order rate attributes, associated with each raw material attribute and each globally unique node identifier, based on at least one of the corresponding target manufacturing rate attribute and the corresponding raw material consumption rate attribute. In some examples the raw material attribute is based on both the corresponding target manufacturing rate attribute and the corresponding raw material consumption rate attribute.

The controller may be configured to receive, via the network interface, a demand attribute corresponding to a globally unique vendor identifier and a globally unique product identifier, and wherein the controller is configured to determine the target manufacturing rate based on at least one of the demand attribute and the consumption attribute. In some examples, the controller is configured to determine the target manufacturing rate based on both the demand attribute and the consumption attribute.

In some examples the controller is configured to make a determination of the target manufacturing rate for an item corresponding to a globally unique product identifier based on a rate of change of the consumption attribute for the item corresponding to the corresponding globally unique product identifier over a selected threshold period of time.

The controller may be configured to maintain, in the data structure, a stock level attribute associated with each globally unique product identifier and each globally unique vendor identifier;
and wherein the controller is configured to determine the target manufacturing rate for each of the items represented by the globally unique product identifier for each of the plurality of manufacturing facilities represented by a corresponding globally unique node identifier based on the stock level attributes for each of the globally unique vendor identifiers.

In the event that the stock level attribute indicates that the level of stock of a particular item held by a first vendor is above a selected threshold level of surplus stock, and another stock level attribute indicates that the level of stock of the same item held by a second vendor is below a selected threshold level of minimum stock, the controller may be configured to provide an indication to the second vendor to obtain stock from the first vendor.

Advantageously this may enable a vendor to shift old or non- performing stock lines, and avoid the manufacturer manufacturing surplus stock, which may advantageously improve the carbon footprint of the items and the manufacturing and sale process.

In some examples the controller is configured to provide a recommendation to a selected one of the manufacturing facilities of items to manufacture based on the consumption attributes associated with the plurality of globally unique product identifiers and associated with the plurality of globally unique vendor identifiers. For example, the controller may comprise a machine learning model which may be operable to estimate, for example, an indication of expected consumer demand at a vendor which may be used by the controller to determine the consumption attribute and/or the target manufacturing rate attribute. Additionally or alternatively, the machine learning model may be operable to estimate projected peaks or surges in demand, or drops in demand. In some examples the machine learning model may be operable to estimate when a manufacturing should begin manufacturing items, for example based on expected consumption rates at a vendor or vendors and based on parameters received from the manufacturing facilities, such as the manufacturing capacity, run times, levels of raw material, costs of raw materials and so on. Additionally or alternatively the manufacturing system and/or the machine learning model may be operable to provide an indication to a vendor of other alternative items to supply, for example, based on consumption rates at other vendors that have features in common with the vendor (e.g. the type of products or items stocked, the size of the vendor, historic sales data etc.). In this way the manufacturing system may be operable to suggest reorders for vendors and/or manufacturing facilities, suggest potential new product lines to manufacture and/or sell, and to mitigate issues that might arise due to surges in demand. In some examples the machine learning model may be operable to predict shortages in supply of items and may be operable to take mitigating actions based on these predicted shortages. For example, a controller operating the machine learning model may be configured to provide an indication to a manufacturing facility to start manufacturing a particular item on a certain date to mitigate against a predicted shortage in supply. Additionally or alternatively a controller operating the machine learning model may be configured to adjust the target manufacturing rate attribute based on a predicted shortage in supply at a point in time in the future, so that more stock of that item is made in advance of the predicted shortage in supply.

In some examples the controller is configured to provide a recommendation to a selected one of the vendors of items to stock based on the consumption attributes associated with the plurality of globally unique product identifiers and associated with the plurality of globally unique vendor identifiers.

In some examples the controller is configured to provide a recommendation to a selected one of the manufacturing facilities of when to manufacture a selected item based on the consumption attributes associated with the globally unique product identifiers for that item and associated with the corresponding plurality of globally unique vendor identifiers.

In some examples the controller is configured to further receive a return attribute associated with a globally unique product identifier and a corresponding globally unique vendor identifier;
and wherein the controller is configured to maintain in the data structure an association between the return attribute, the globally unique product identifier and the corresponding globally unique vendor identifier;
and wherein the controller is configured to determine the globally unique node identifier for the manufacturing facility that manufactured the item corresponding to the globally unique product identifier; and
wherein the controller is configured to maintain in the data structure an association between the return attribute, the globally unique product identifier and the globally unique node identifier.

The controller may be configured to provide an alert to a manufacturing facility in the event that the return attribute associated with a globally unique node identifier associated with that manufacturing facility reaches a selected threshold level.

Advantageously this may enable tighter quality control procedures to be practiced, whereby returned items can be traced back exactly to the manufacturing facility where they were made. This can enable the identification of the cause of the failure in quality control and ensure that the quality of items manufactured by that facility is improved.

In another aspect of the disclosure there is provided a method for controlling the flow of material in a manufacturing process. The method comprising:
maintaining in a data structure a set of data items representing the manufacturing output of a plurality of items from each of a plurality of manufacturing facilities, wherein
   each of the plurality of items is represented by a corresponding globally unique product identifier, and
   each of the plurality of manufacturing facilities is represented by a corresponding globally unique node identifier;
receiving, from each of a plurality of third parties, a consumption attribute associated with a corresponding globally unique product identifier and associated with a corresponding globally unique vendor identifier, wherein the consumption attribute represents a rate of consumption of the item at a vendor; and
determining a target manufacturing rate, for each of the items represented by the globally unique product identifier for each of the plurality of manufacturing facilities represented by a corresponding globally unique node identifier, based on the consumption attribute; and
maintaining an association between each globally unique product identifier, each globally unique node identifier, and a corresponding respective target manufacturing rate attribute based on the determined target manufacturing rate for each of the items represented by the globally unique product identifier for each of the plurality of manufacturing facilities; and
communicating the corresponding respective target manufacturing rate attribute to each of the plurality of manufacturing facilities.

The method may further comprise:
maintaining, in the data structure, a geographical indication for each globally unique vendor identifier, and a geographical indication for each globally unique node identifier; and
wherein making a determination of a target manufacturing rate for a particular one of the manufacturing facilities is based on the consumption attribute and a comparison of the geographical indication of each globally unique vendor identifier and the geographical indication of each globally unique node identifier.

In some examples the method further comprises determining a new target manufacturing rate based on a change in the received consumption attribute from at least one of the plurality of third parties.

The method may further comprise maintaining, in the data structure, a set of raw material attributes corresponding to at least some of the globally unique product identifiers; and
maintaining in the data structure a set of raw material consumption rate attributes associated with each of the raw material attributes based on the consumption attribute for each corresponding globally unique product identifier;
maintaining in the data structure a set of raw material order rate attributes, associated with each raw material attribute and each globally unique node identifier, based on at least one of the corresponding target manufacturing rate attribute and the corresponding raw material consumption rate attribute. In some examples the set of raw material order rate attributes may be based on both the corresponding target manufacturing rate attribute and the corresponding raw material consumption rate attribute

The method may further comprise receiving a demand attribute corresponding to a globally unique vendor identifier and a globally unique product identifier, and determining the target manufacturing rate based on at least one of the demand attribute and the consumption attribute. In some examples the target manufacturing rate may be based on both the demand attribute and the consumption attribute.

The method may further comprise determining the target manufacturing rate for an item corresponding to a globally unique product identifier based on a rate of change of the consumption attribute for the item corresponding to the corresponding globally unique product identifier over a selected threshold period of time.

In some examples the method further comprises maintaining, in the data structure, a stock level attribute associated with each globally unique product identifier and each globally unique vendor identifier;
and determining the target manufacturing rate for each of the items represented by the globally unique product identifier for each of the plurality of manufacturing facilities represented by a corresponding globally unique node identifier based on the stock level attributes for each of the globally unique vendor identifiers.

In the event that the stock level attribute indicates that the level of stock of a particular item held by a first vendor is above a selected threshold level of surplus stock, and another stock level attribute indicates that the level of stock of the same item held by a second vendor is below a selected threshold level of minimum stock, the method may comprise providing an indication to the second vendor to obtain stock from the first vendor.

The method may further comprise providing a recommendation to a selected one of the manufacturing facilities of items to manufacture based on the consumption attributes associated with the plurality of globally unique product identifiers and associated with the plurality of globally unique vendor identifiers.

In some examples the method further comprises providing a recommendation to a selected one of the vendors of items to stock based on the consumption attributes associated with the plurality of globally unique product identifiers and associated with the plurality of globally unique vendor identifiers.

The method may further comprise providing a recommendation to a selected one of the manufacturing facilities of when to manufacture a selected item based on the consumption attributes associated with the globally unique product identifiers for that item and associated with the corresponding plurality of globally unique vendor identifiers.

In some examples the method comprises receiving a return attribute associated with a globally unique product identifier and a corresponding globally unique vendor identifier;
maintaining in the data structure an association between the return attribute, the globally unique product identifier and the corresponding globally unique vendor identifier;
determining the globally unique node identifier for the manufacturing facility that manufactured the item corresponding to the globally unique product identifier; and
maintaining in the data structure an association between the return attribute, the globally unique product identifier and the globally unique node identifier.

In some examples the method comprises providing an alert to a manufacturing facility in the event that the return attribute associated with a globally unique node identifier associated with that manufacturing facility reaches a selected threshold level.

In another aspect of the disclosure there is provided a computer readable non-transitory storage medium comprising a program for a computer configured to cause a processor to perform the method described above.

### Drawings

Embodiments of the disclosure will now be described, by way of example only, with reference to the accompanying drawings, in which:
Fig. 1 shows an example functional schematic of an example manufacturing system of embodiments of the disclosure;
Fig. 2 shows an example functional relationship between the identifiers and their attributes; and
Fig. 3 shows an example functional flow of an example method for controlling the flow of material in a manufacturing process of embodiments of the disclosure.

### Specific description

Embodiments of the disclosure relate to a manufacturing system and method that can improve the timing and efficiency of manufacturing processes to meet, for example, "just in time" processing and to ensure that stock levels are maintained within acceptable levels. Embodiments of the disclosure may also enable unused or surplus stock to be better distributed between vendors, to better improve quality control processing and/or to better distribute items over a geographical area.

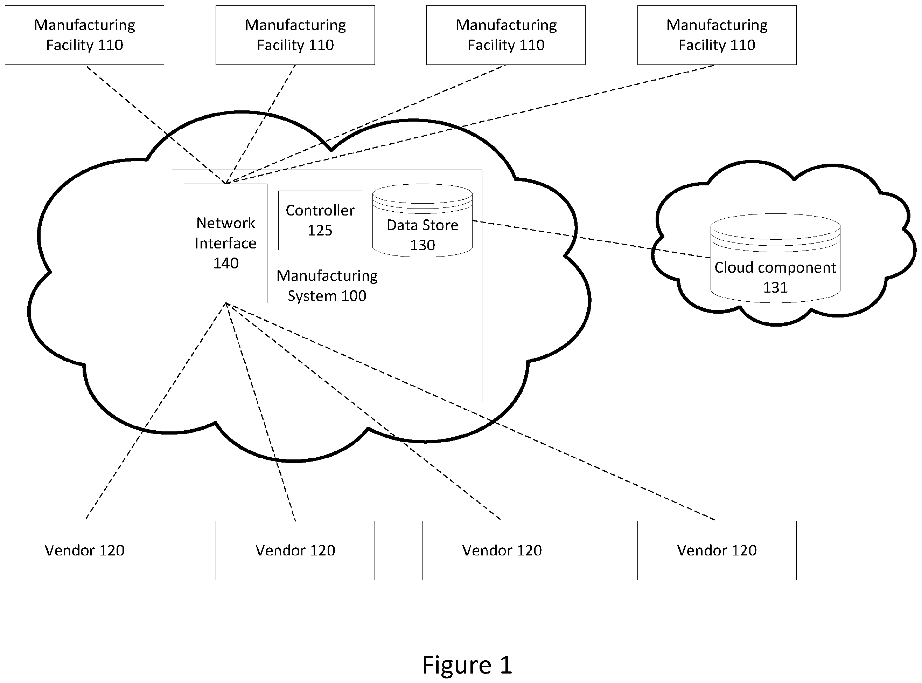

Fig. 1 shows an example functional schematic of an example manufacturing system of embodiments of the disclosure.

In the example shown, the manufacturing system 100 is a computer system residing in the cloud. However, it will be understood that in other examples the manufacturing system 100 may be located locally to a manufacturing facility and/or be distributed over a plurality of different computer systems or entities. For example, the manufacturing system 100 may be implemented as part of a computer system as described in more detail below.

As shown in Fig. 1, the manufacturing system 100 comprises a controller 125, a data store 130 and a network interface 140. The controller is coupled to the network interface 140 and the data store 130. The data store 130 may be local to the manufacturing system 100 (for example, the data store 130 may include a system memory component (e.g., RAM), a static storage component (e.g., ROM), and/or a disk drive (e.g., a solid-state drive, a hard drive). Additionally or alternatively the data store 130 may comprise a cloud component 131, for example the data store 130 may be coupled to or be provided as part of resource on a public cloud server.

The controller 125 maintains in the data store 130 and/or the cloud component 131 a data structure.

The network interface 140 is operable to communicate with a plurality of manufacturing facilities 110, and a plurality of third parties who in the example shown are vendors 120, although it will be understood that in other examples the third parties may be different entities such as consumers of a product or service. The network interface 140 may be operable to communicate on a short-range and/or a long-range radio frequency wireless communications network, such as a mobile telecommunications network. The plurality of manufacturing facilities 110 and the plurality of vendors 120 may be at geographically distinct and separate locations.

The controller 125 is configured to maintain in the data structure a set of data items representing the manufacturing output of a plurality of items from each of a plurality of manufacturing facilities 110.

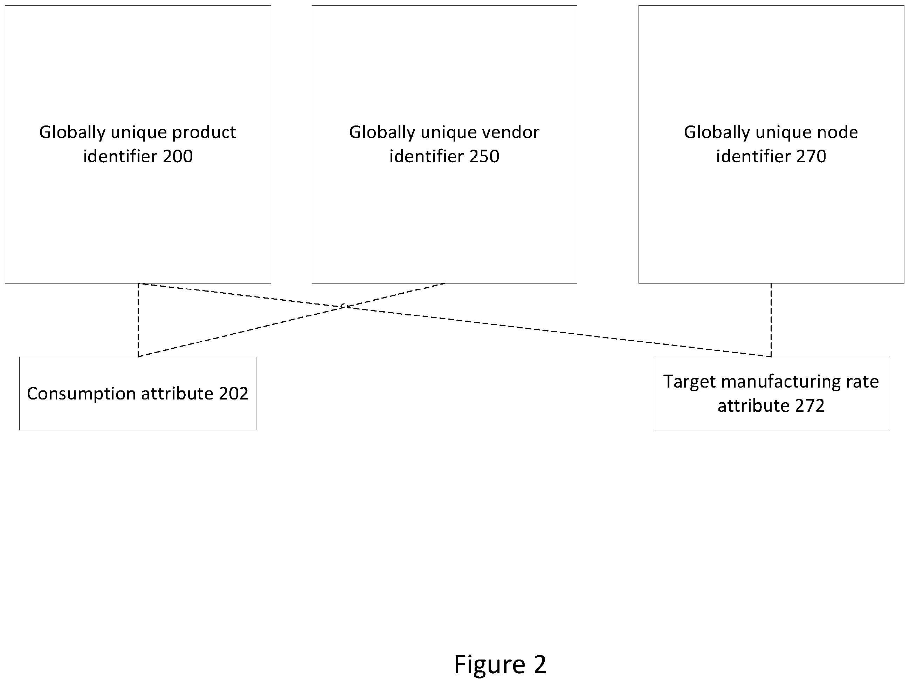

As shown in Fig. 2, each of the plurality of items is represented by a corresponding globally unique product identifier 200, and each of the plurality of manufacturing facilities is represented by a corresponding globally unique node identifier 270.

The controller 125 is configured to receive via the network interface 140, from each of the vendors 120, a consumption attribute 202 associated with a corresponding globally unique product identifier 200 and associated with a corresponding globally unique vendor identifier 250. The consumption attribute 202 represents a rate of consumption of the item at a corresponding vendor 120.

The controller 125 is configured to make a determination of a target manufacturing rate, for each of the items represented by the globally unique product identifier 200 for each of the plurality of manufacturing facilities 110 represented by a corresponding globally unique node identifier 270, based on the consumption attribute 202.

For example, the controller 125 may receive an indication that the items are consumed at a selected number (e.g. three out of four) of the vendors 120, and may receive an indication of differing consumption rates for each of these vendors 120 based on respective consumption attributes. The controller 125 may determine how the consumption attributes 202 vary over time to obtain an indication of the consumption rate for each vendor 120, and may determine a target manufacturing rate for a manufacturing facility 110 based on a mathematical function of the respective consumption rates. The mathematical function may be an average, and or may be weighted based on parameters received from the manufacturing facilities, such as the manufacturing capacity, run times, levels of raw material and so on.

In examples where the same item may be made by a plurality of different manufacturing facilities 110, the controller 125 may set a different target manufacturing rate for each manufacturing facility 110. The controller 125 may receive parameters indicative of, for example, the manufacturing capacity, run times, levels of raw material and so on from each manufacturing facility 110, and may make a determination of the target manufacturing rate for each manufacturing facility 110 based on these parameters and a mathematical function of the respective consumption rates.

The controller 125 is configured to maintain an association between each globally unique product identifier 200, each globally unique node identifier 270, and a corresponding target manufacturing rate attribute 272 based on the determined target manufacturing rate for each of the items represented by the globally unique product identifier 200 for each of the plurality of manufacturing facilities 110. The controller 125 may be configured to maintain this association in the data structure such as the data store 130 and/or cloud component 131.

The controller 125 is optionally configured to communicate, via the network interface 140, the corresponding target manufacturing rate attribute 272 to each of the plurality of manufacturing facilities 110. Each manufacturing facility 110 may use this target manufacturing rate attribute 272 to control the speed and/or timing at which it makes items corresponding to the globally unique product identifier 200 to which the manufacturing rate attribute 272 is associated.

In some example the target manufacturing rate may be determined based on geography - for example the geographical location of the vendors 120 and/or the manufacturing facilities 110. For example, the controller 125 may be configured to maintain, in the data structure, a geographical indication for each globally unique vendor identifier 250, and a geographical indication for each globally unique node identifier 270. The controller 125 may be configured to make a determination of a target manufacturing rate for a particular one of the manufacturing facilities 110 based on the consumption attribute 202 and a comparison of the geographical indication of each globally unique vendor identifier 250 and the geographical indication of each globally unique node identifier 270.

It will be understood that in some examples the controller 125 is configured to determine a new target manufacturing rate based on a change in the received consumption attribute 202 from at least one of the plurality of third parties (i.e. one of the vendors 120).

It will be understood that knowledge of the target manufacturing attribute 272 by a manufacturing facility 110 may help improve the timing and level of manufacturing at the manufacturing facility 110 and also help in the management and ordering of raw materials required to manufacture the items associated with the target manufacturing rate attribute 272 and the globally unique product identifier 200. For example, the controller 125 may be configured to maintain, in the data structure, a set of raw material attributes corresponding to at least some of the globally unique product identifiers 200. The set of raw material attributes may generally correspond to different raw materials that are required to manufacture the item relating to the globally unique product identifier 200. The controller 250 may be configured to maintain in the data structure a set of raw material consumption rate attributes associated with each of the raw material attributes based on the consumption attribute for each corresponding globally unique product identifier 200. The controller 125 may be configured maintain in the data structure a set of raw material order rate attributes, associated with each raw material attribute and each globally unique node identifier 270, based on at least one of, or a combination of both, the corresponding target manufacturing rate attribute and the corresponding raw material consumption rate attribute.

For example, the raw materials that are involved in the manufacture of a selected item may be known or provided by a manufacturing facility 110 to the manufacturing system 100, for example via the network interface 140. The manufacturing system 100 may ascribe a raw material attribute to each respective raw material. In some examples other attributes relating to the raw materials may be provided or obtained - for example, the cost of raw materials, their availability, the time it takes for the raw materials to be ordered and so on. The manufacturing system 100 may be configured to adjust the target manufacturing rate attribute 272 based on these raw material attributes. It will be appreciated that in some examples the raw material attributes may be unique to each manufacturing facility 110 (e.g. because the supply of certain raw materials to one manufacturing facility 110 is more readily available than at another manufacturing facility 110, e.g. due to geographical factors).

The controller 125 may additionally or alternatively be configured to receive, via the network interface 140, an optional demand attribute corresponding to a globally unique vendor identifier 250 and a globally unique product identifier 200. The demand attribute, for example, may correspond to a vendor's desired demand for a particular item (e.g. over a selected future time interval), which may be different from its consumption rate of that item (which may be over a previous/historic selected time interval). For example, if a vendor 120 is wishing to stockpile a selected item (e.g. because the vendor predicts a surge in demand at some point in future or predicts disruption to the supply chain) it may demand more of it while its consumption rate may remain, for the short term at least, broadly the same or unchanged.

The controller 125 may be configured to determine the target manufacturing rate (and thereby set the target manufacturing rate attribute 272) based on at least one of, or a combination of both, the demand attribute and the consumption attribute 202. It will be understood that in some examples the manufacturing system 100 may comprise a machine learning model, and the demand attribute may be determined by a machine learning model that estimates the demand, e.g. for a particular item at a particular vendor 120, or a particular item across a plurality of different vendors 120.

It will be understood that in some examples the controller 125 is configured to make a determination of the target manufacturing rate for an item corresponding to a globally unique product identifier 200 based on a rate of change of the consumption attribute 202 for the item corresponding to the corresponding globally unique product identifier 200 over a selected threshold period of time. It will be understood that in some examples the manufacturing system 100 may comprise a machine learning model, and the machine learning model may be operable to provide an indication or an estimation of the (e.g. a predicted) rate of change of the consumption attribute 202 over a selected time interval.

In some examples the manufacturing system 100 may help improve stock control and stock flow between manufacturing facilities 110 and/or between vendors 120. For example, the controller 125 may be configured to maintain, in the data structure, a stock level attribute associated with each globally unique product identifier 200 and each globally unique vendor identifier 250. In such examples the controller 125 may be configured to determine the target manufacturing rate for each of the items represented by the globally unique product identifier 200 for each of the plurality of manufacturing facilities 110 represented by a corresponding globally unique node identifier 270 based on the stock level attributes for each of the globally unique vendor identifiers 250. In the event that the stock level attribute indicates that the level of stock of a particular item held by a first vendor 120 is above a selected threshold level of surplus stock, and another stock level attribute indicates that the level of stock of the same item held by a second vendor 120 is below a selected threshold level of minimum stock, the controller 125 may be configured to provide an indication to the second vendor 120 to obtain stock from the first vendor 120. In this way surplus stock can be shared between vendors 120 which may help improve supply of items and avoid unnecessary delays caused by the manufacturing process and/or help improve the timing of manufacturing runs of the product in question so that they can be conducted more efficiently. It will be understood that by improving stock control and stock flow in this way, representatives from either the vendors 120 and/or the manufacturing facilities 110 will have better access to data and therefore greater transparency of the process. This may mean that the number of visits required by the representatives may be advantageously reduced.

In some examples the manufacturing system 100 may help track and implement price changes between manufacturing facilities 110 and/or between vendors 120. For example, the controller 125 may be configured to maintain, in the data structure, a sale price identifier and a manufacturing cost identifier. The sale price identifier may be a function of the manufacturing cost identifier. For example, the vendor(s) 120 may use the sale price identifier to set the sales price for the stock that they are selling. By maintaining a sale price identifier and a manufacturing cost identifier the controller can accurately and in real time track the relationship between the manufacturing cost and the sales price and implement any changes in price that may be implemented either by the manufacturing facilities 110 (for example due to changes in the cost of raw materials and/or exchange rates) and/or any changes in the sales price implemented by the vendor(s) 120.

In some examples the controller 125 is configured to provide a recommendation to a selected one of the manufacturing facilities 110 of items to manufacture based on the consumption attributes 202 associated with the plurality of globally unique product identifiers 200 and associated with the plurality of globally unique vendor identifiers 250. For example, the controller 125 may comprise or have access to a machine learning model. The machine learning model may be operable to estimate future consumption attributes 202 for different vendors 202 for a selected time period in the future, and the controller 125 may be operable to estimate a predicted future target manufacturing rate attribute 272 based on the estimated future consumption attributes. In some examples the machine learning model may be operable to estimate when a manufacturing should begin manufacturing items, for example based on expected consumption rates at a vendor or vendors and based on parameters received from the manufacturing facilities, such as the manufacturing capacity, run times, levels of raw material and so on. Additionally or alternatively the manufacturing system 100 and/or the machine learning model may be operable to provide an indication to a vendor 120 of other alternative items to supply, for example, based on consumption rates at other vendors 120 that have features in common with the vendor 120 (e.g. the type of products or items stocked, the size of the vendor, historic sales data etc.). In this way the manufacturing system 100 may be operable to suggest reorders for vendors 120 and/or manufacturing facilities 100, suggest potential new product lines to manufacture and/or sell, and to mitigate issues that might arise due to surges in demand.

The controller 125 may be configured to provide a recommendation to a selected one of the vendors 120 of items to stock based on the consumption attributes 202 associated with the plurality of globally unique product identifiers 200 and associated with the plurality of globally unique vendor identifiers 250. The controller 125 may be configured to employ the machine learning model to provide the recommendation. The machine learning model may estimate, for example based on consumption attributes 202 associated with other vendors 120, that a particular item may sell well at another vendor 120.

The controller 125 may additionally or alternatively be configured to provide a recommendation to a selected one of the manufacturing facilities 110 of when to manufacture a selected item based on the consumption attributes 202 associated with the globally unique product identifiers 200 for that item and associated with the corresponding plurality of globally unique vendor identifiers 250.

It will be understood that the manufacturing system 100 may be configured to improve quality control. For example, the controller 125 may be configured to further receive a return attribute associated with a globally unique product identifier 200 and a corresponding globally unique vendor identifier 250. The controller 125 may be configured to maintain in the data structure an association between the return attribute, the globally unique product identifier 200 and the corresponding globally unique vendor identifier 250, and determine the globally unique node identifier 270 for the manufacturing facility 110 that manufactured the item corresponding to the globally unique product identifier 200. This may be performed, for example, by a lookup operation in the data structure. The controller 125 may be configured to maintain in the data structure an association between the return attribute, the globally unique product identifier 200 and the globally unique node identifier 270. The controller 125 may additionally be configured to provide an alert to a manufacturing facility 110, such as the manufacturing facility 110 responsible for manufacturing the returned item(s), in the event that the return attribute associated with a globally unique node identifier 270 associated with that manufacturing facility 110 reaches a selected threshold level.

For example, if the return attribute indicates that a selected number of returns or faults have been recorded by a vendor 120 against a particular item, the manufacturing facility or facilities responsible for manufacturing that item and/or supplying that vendor 120 may be notified. Similarly, if the selected threshold level has been reached but a manufacturing facility 110 was not responsible for manufacturing the items that have resulted in the return attributes exceeding the threshold level, the manufacturing facility 110 may nonetheless be notified so that it can facilitate closer inspection of the manufacturing process and/or so that the manufacturing facility 110 can increase production of the items in question to supplace the manufacturing facility 110 that has produced items of inferior quality and resulted in the return attribute exceeding the threshold level.

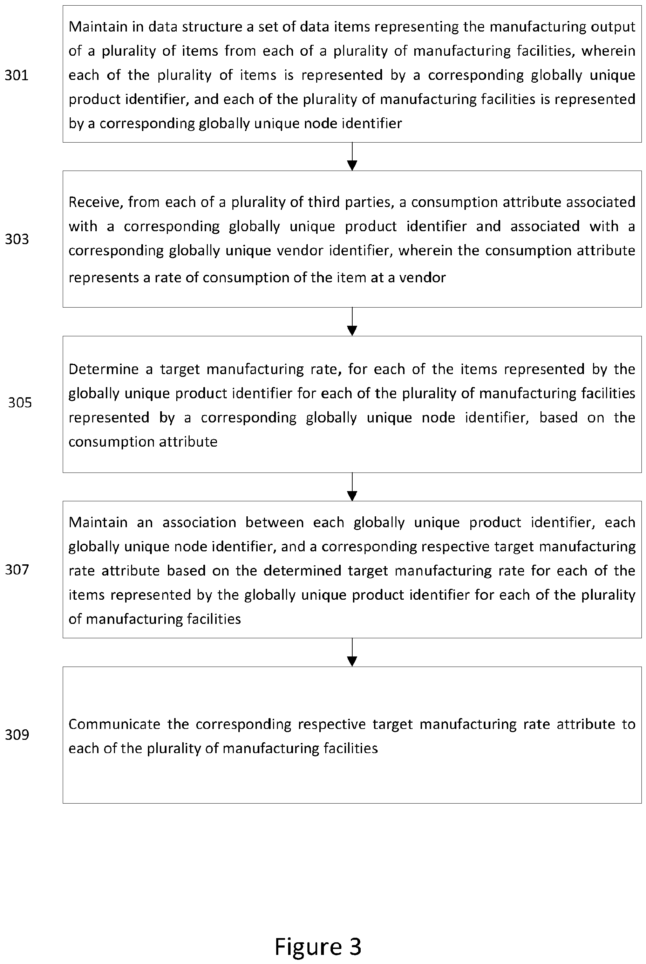

An example functional flow of an example method for controlling the flow of material in a manufacturing process of embodiments of the disclosure is shown in Fig. 3. The method shown in Fig. 3 and described below may be implemented by the manufacturing system described above and with reference to Fig. 1.

At step 301 the method comprises maintaining in a data structure a set of data items representing the manufacturing output of a plurality of items from each of a plurality of manufacturing facilities 110, wherein each of the plurality of items is represented by a corresponding globally unique product identifier 200, and each of the plurality of manufacturing facilities 110 is represented by a corresponding globally unique node identifier 270.

At step 303 the method comprises receiving, from each of a plurality of third parties (e.g. vendors 120), a consumption attribute 202 associated with a corresponding globally unique product identifier 200 and associated with a corresponding globally unique vendor identifier 250, wherein the consumption attribute 202 represents a rate of consumption of the item at a vendor 120.

At step 305 the method comprises determining a target manufacturing rate, for each of the items represented by the globally unique product identifier 200 for each of the plurality of manufacturing facilities 110 represented by a corresponding globally unique node identifier 270, based on the consumption attribute 202.

At step 307 the method comprises maintaining an association between each globally unique product identifier 200, each globally unique node identifier 270, and a corresponding respective target manufacturing rate attribute 272 based on the determined target manufacturing rate for each of the items represented by the globally unique product identifier 200 for each of the plurality of manufacturing facilities 110.

At step 309 the method comprises optionally communicating the corresponding respective target manufacturing rate attribute 272 to each of the plurality of manufacturing facilities 110.

The method may optionally further comprise maintaining, in the data structure, a geographical indication for each globally unique vendor identifier, and a geographical indication for each globally unique node identifier. In such examples, the step of making a determination of a target manufacturing rate for a particular one of the manufacturing facilities 110 may be based on the consumption attribute 202 and a comparison of the geographical indication of each globally unique vendor identifier 250 and the geographical indication of each globally unique node identifier 270.

In some examples the method comprises determining a new target manufacturing rate based on a change in the received consumption attribute 202 from at least one of the plurality of third parties (e.g. vendors 120).

The method may further comprise maintaining, in the data structure, a set of raw material attributes corresponding to at least some of the globally unique product identifiers 200. In such examples the method may comprise maintaining in the data structure a set of raw material consumption rate attributes associated with each of the raw material attributes based on the consumption attribute 202 for each corresponding globally unique product identifier 200. The method may further comprise maintaining in the data structure a set of raw material order rate attributes, associated with each raw material attribute and each globally unique node identifier 270, based on at least one of the corresponding target manufacturing rate attribute 272 and the corresponding raw material consumption rate attribute.

For example, the raw materials that are involved in the manufacture of a selected item may be known or provided by a manufacturing facility 110 to the manufacturing system 100. The manufacturing system 100 may ascribe a raw material attribute to each respective raw material. In some examples other attributes relating to the raw materials may be provided or obtained - for example, the cost of raw materials, their availability, the time it takes for the raw materials to be ordered and so on. The manufacturing system 100 may be configured to adjust the target manufacturing rate attribute 272 based on these raw material attributes.

The method may further comprise receiving a demand attribute corresponding to a globally unique vendor identifier 250 and a globally unique product identifier 200, and determining the target manufacturing rate based on at least one of the demand attribute and the consumption attribute 202.

The method may further comprise determining the target manufacturing rate for an item corresponding to a globally unique product identifier 200 based on a rate of change of the consumption attribute 202 for the item corresponding to the corresponding globally unique product identifier 200 over a selected threshold period of time.

In some examples the method further comprises maintaining, in the data structure, a stock level attribute associated with each globally unique product identifier 200 and each globally unique vendor identifier 250. In such examples the method may comprise determining the target manufacturing rate for each of the items represented by the globally unique product identifier 200 for each of the plurality of manufacturing facilities 110 represented by a corresponding globally unique node identifier 270 based on the stock level attributes for each of the globally unique vendor identifiers 250.

In the event that the stock level attribute indicates that the level of stock of a particular item held by a first vendor 120 is above a selected threshold level of surplus stock, and another stock level attribute indicates that the level of stock of the same item held by a second vendor 120 is below a selected threshold level of minimum stock, the method may comprise providing an indication to the second vendor 120 to obtain stock from the first vendor 120. In this way surplus stock can be shared between vendors 120 which may help improve supply of items and avoid unnecessary delays caused by the manufacturing process and/or help improve the timing of manufacturing runs of the product in question so that they can be conducted more efficiently.

The method may further comprise providing a recommendation to a selected one of the manufacturing facilities 110 of items to manufacture based on the consumption attributes 202 associated with the plurality of globally unique product identifiers 200 and associated with the plurality of globally unique vendor identifiers 250. For example the method may comprise using a machine learning model to estimate future consumption attributes 202 for different vendors 202 for a selected time period in the future, and the controller 125 may be operable to estimate a predicted future target manufacturing rate attribute 272 based on the estimated future consumption attributes. In some examples the machine learning model may be operable to estimate when a manufacturing should begin manufacturing items, for example based on expected consumption rates at a vendor or vendors and based on parameters received from the manufacturing facilities, such as the manufacturing capacity, run times, levels of raw material and so on. Additionally or alternatively the manufacturing system 100 and/or the machine learning model may be operable to provide an indication to a vendor 120 of other alternative items to supply, for example, based on consumption rates at other vendors 120 that have features in common with the vendor 120 (e.g. the type of products or items stocked, the size of the vendor, historic sales data etc.). In this way the manufacturing system 100 may be operable to suggest reorders for vendors 120 and/or manufacturing facilities 100, suggest potential new product lines to manufacture and/or sell, and to mitigate issues that might arise due to surges in demand.

Additionally or alternatively, the method may further comprise providing a recommendation to a selected one of the vendors 120 of items to stock based on the consumption attributes 202 associated with the plurality of globally unique product identifiers 200 and associated with the plurality of globally unique vendor identifiers 250. For example, the method may comprise employing a machine learning model to provide the recommendation. The machine learning model may estimate, for example based on consumption attributes 202 associated with other vendors 120, that a particular item may sell well at another vendor 120.

Additionally or alternatively, the method may further comprise providing a recommendation to a selected one of the manufacturing facilities 110 of when to manufacture a selected item based on the consumption attributes 202 associated with the globally unique product identifiers 200 for that item and associated with the corresponding plurality of globally unique vendor identifiers 250. For example, the method may comprise employing a machine learning model that may estimate when a production run of a particular item should start and how long it should last for based on, for example, raw material attributes, consumption attributes 202, estimated future consumption attributes, geographical attributes, demand attributes and/or target manufacturing rate attributes 272. This may help to improve "just in time" manufacture and supply of items.

In some examples the method further comprises receiving a return attribute associated with a globally unique product identifier 200 and a corresponding globally unique vendor identifier 250. In such example the method may further comprise maintaining in the data structure an association between the return attribute, the globally unique product identifier 200 and the corresponding globally unique vendor identifier 250, and determining the globally unique node identifier 270 for the manufacturing facility 110 that manufactured the item corresponding to the globally unique product identifier 200. In such examples the method may further comprise maintaining in the data structure an association between the return attribute, the globally unique product identifier 200 and the globally unique node identifier 270. In such examples the method may additionally comprise providing an alert to a manufacturing facility 110 in the event that the return attribute associated with a globally unique node identifier 270 associated with that manufacturing facility 110 reaches a selected threshold level. Advantageously this may enable tighter quality control procedures to be practiced, whereby returned items can be traced back exactly to the manufacturing facility 110 where they were made. This can enable the identification of the cause of the failure in quality control and ensure that the quality of items manufactured by that facility 110 is improved.

It will be understood that the manufacturing system 100 may be implemented in software or hardware, for example as dedicated circuitry. For example, the manufacturing system 100 may be implemented as part of a computer system. The computer system may include a bus or other communication mechanism for communicating information data, signals, and information between various components of the computer system. The components may include an input/output (I/O) component that processes a user (i.e., sender, recipient, service provider) action, such as selecting keys from a keypad/keyboard, selecting one or more buttons or links, etc., and sends a corresponding signal to the bus. The I/O component may also include an output component, such as a display and a cursor control (such as a keyboard, keypad, mouse, etc.). A transceiver or network interface, such as network interface 140, may transmit and receive signals between the computer system and other devices, such as another user device, a merchant server, or a service provider server via a network. In one embodiment, the transmission is wireless, although other transmission mediums and methods may also be suitable. A processor, which can be a micro-controller, digital signal processor (DSP), or other processing component, processes these various signals, such as for display on the computer system or transmission to other devices via a communication link. The processor may also control transmission of information, such as cookies or IP addresses, to other devices.

The components of the computer system may also include a system memory component (e.g., RAM), a static storage component (e.g., ROM), and/or a disk drive (e.g., a solid-state drive, a hard drive). The computer system performs specific operations by the processor and other components by executing one or more sequences of instructions contained in the system memory component.

Logic may be encoded in a computer readable medium, which may refer to any medium that participates in providing instructions to a processor for execution. Such a medium may take many forms, including but not limited to, non-volatile media, volatile media, and transmission media. In various implementations, non-volatile media includes optical or magnetic disks, volatile media includes dynamic memory, such as a system memory component, and transmission media includes coaxial cables, copper wire, and fiber optics. In one embodiment, the logic is encoded in non-transitory computer readable medium. In one example, transmission media may take the form of acoustic or light waves, such as those generated during radio wave, optical, and infrared data communications.

Some common forms of computer readable media includes, for example, floppy disk, flexible disk, hard disk, magnetic tape, any other magnetic medium, CD-ROM, any other optical medium, punch cards, paper tape, any other physical medium with patterns of holes, RAM, PROM, EPROM, FLASH-EPROM, any other memory chip or cartridge, or any other medium from which a computer is adapted to read.

In various embodiments of the present disclosure, execution of instruction sequences to practice the present disclosure may be performed by a computer system. In various other embodiments of the present disclosure, a plurality of computer systems coupled by a communication link to a network (e.g., such as a LAN, WLAN, PTSN, and/or various other wired or wireless networks, including telecommunications, mobile, and cellular phone networks) may perform instruction sequences to practice the present disclosure in coordination with one another.

It will also be understood that aspects of the present disclosure may be implemented using hardware, software, or combinations of hardware and software. Also, where applicable, the various hardware components and/or software components set forth herein may be combined into composite components comprising software, hardware, and/or both without departing from the spirit of the present disclosure. Where applicable, the various hardware components and/or software components set forth herein may be separated into sub-components comprising software, hardware, or both without departing from the scope of the present disclosure. In addition, where applicable, it is contemplated that software components may be implemented as hardware components and vice-versa.

Software in accordance with the present disclosure, such as program code and/or data, may be stored on one or more computer readable mediums. It is also contemplated that software identified herein may be implemented using one or more general purpose or specific purpose computers and/or computer systems, networked and/or otherwise. Where applicable, the ordering of various steps described herein may be changed, combined into composite steps, and/or separated into sub-steps to provide features described herein.

As noted above, in some examples the manufacturing system 100 may make use of a machine learning model. For example, controller 125 may be configured to run a machine learning model stored on the data store 130. The machine learning model may comprise a neural network. The neural network may comprise at least one of a deep residual network, a highway network, a densely connected network and a capsule network.

For any such type of network, the network may comprise a plurality of different neurons, which are organised into different layers. Each neuron is configured to receive input data, process this input data and provide output data. Each neuron may be configured to perform a specific operation on its input, e.g. this may involve mathematically processing the input data. The input data for each neuron may comprise an output from a plurality of other preceding neurons. As part of a neuron's operation on input data, each stream of input data (e.g. one stream of input data for each preceding neuron which provides its output to the neuron) is assigned a weighting. That way, processing of input data by a neuron comprises applying weightings to the different streams of input data so that different items of input data will contribute more or less to the overall output of a neuron. Adjustments to the value of the inputs for a neuron, e.g. as a consequence of the input weightings changing, may result in a change to the value of the output for that neuron. The output data from each neuron may be sent to a plurality of subsequent neurons.

The neurons may be organised in layers. Each layer may comprise a plurality of neurons which operate on data provided to them from the output of neurons in preceding layers. Within each layer there may be a large number of different neurons, each of which applies a different weighting to its input data and performs a different operation on its input data. The input data for all of the neurons in a layer may be the same, and the output from the neurons will be passed to neurons in subsequent layers.

The model may comprise a plurality of different layers which have different functions. The neural network may include at least one convolutional layer configured to convolve input data across its height and width. The neural network may also have a plurality of filtering layers, each of which comprises a plurality of neurons configured to focus on and apply filters to different portions of the input data. Other layers may be included for processing the input data such as pooling layers (to introduce non-linearity) such as maximum pooling and global average pooling, Rectified Linear Units layer (ReLU) and loss layers, e.g. some of which may include regularization functions. The final block of layers may receive input from the last output layer (or more layers if there are branches present). The final block may comprise at least one fully connected layer.

The final output layer may comprise a classifier, such as a softmax, sigmoid or tanh classifier. Different classifiers may be suitable for different types of output; for example, a sigmoid classifier may be suitable where the output is a binary classifier. The output of the neural network may provide an indication of a probability. The probability may, for example, comprise an indication of expected consumer demand at a vendor 120 which may be used by the controller 125 to determine e.g. the consumption attribute 202 and/or the target manufacturing rate attribute 272.

The various features and steps described herein may be implemented as systems comprising one or more memories storing various information described herein and one or more processors coupled to the one or more memories and a network, wherein the one or more processors are operable to perform steps as described herein, as non-transitory machine-readable medium comprising a plurality of machine-readable instructions which, when executed by one or more processors, are adapted to cause the one or more processors to perform a method comprising steps described herein, and methods performed by one or more devices, such as a hardware processor, user device, server, and other devices described herein.

In the context of the present disclosure other examples and variations of the apparatus and methods described herein will be apparent to a person of skill in the art.

## Claims

1. A manufacturing system for controlling the manufacturing process of a plurality of items, the system comprising a controller, a network interface and a data structure;
wherein the controller is configured to maintain in the data structure a set of data items representing the manufacturing output of a plurality of items from each of a plurality of manufacturing facilities, wherein
each of the plurality of items is represented by a corresponding globally unique product identifier, and
each of the plurality of manufacturing facilities is represented by a corresponding globally unique node identifier;
wherein the controller is configured to receive via the network interface, from each of a plurality of third parties, a consumption attribute associated with a corresponding globally unique product identifier and associated with a corresponding globally unique vendor identifier, wherein the consumption attribute represents a rate of consumption of the item at a vendor; and
wherein the controller is configured to make a determination of a target manufacturing rate, for each of the items represented by the globally unique product identifier for each of the plurality of manufacturing facilities represented by a corresponding globally unique node identifier, based on the consumption attribute; and
wherein the controller is configured to maintain an association between each globally unique product identifier, each globally unique node identifier, and a corresponding target manufacturing rate attribute based on the determined target manufacturing rate for each of the items represented by the globally unique product identifier for each of the plurality of manufacturing facilities; and
wherein the controller is configured to communicate, via the network interface, the corresponding target manufacturing rate attribute to each of the plurality of manufacturing facilities.

2. The manufacturing system of claim 1 wherein:
the controller is configured to maintain, in the data structure, a geographical indication for each globally unique vendor identifier, and a geographical indication for each globally unique node identifier; and
wherein the controller is configured to make a determination of a target manufacturing rate for a particular one of the manufacturing facilities based on the consumption attribute and a comparison of the geographical indication of each globally unique vendor identifier and the geographical indication of each globally unique node identif ier.

3. The manufacturing system of claim 1 or 2 wherein the controller is configured to determine a new target manufacturing rate based on a change in the received consumption attribute from at least one of the plurality of third parties.

4. The manufacturing system of any of the previous claims wherein the controller is configured to maintain, in the data structure, a set of raw material attributes corresponding to at least some of the globally unique product identifiers; and
wherein the controller is configured to maintain in the data structure a set of raw material consumption rate attributes associated with each of the raw material attributes based on the consumption attribute for each corresponding globally unique product identifier;
and wherein the controller is configured maintain in the data structure a set of raw material order rate attributes, associated with each raw material attribute and each globally unique node identifier, based on at least one of the corresponding target manufacturing rate attribute and the corresponding raw material consumption rate attribute.

5. The manufacturing system of any of the previous claims wherein the controller is configured to receive, via the network interface, a demand attribute corresponding to a globally unique vendor identifier and a globally unique product identifier, and wherein the controller is configured to determine the target manufacturing rate based on at least one of the demand attribute and the consumption attribute.

6. The manufacturing system of any of the previous claims wherein the controller is configured to make a determination of the target manufacturing rate for an item corresponding to a globally unique product identifier based on a rate of change of the consumption attribute for the item corresponding to the corresponding globally unique product identifier over a selected threshold period of time.

7. The manufacturing system of any of the previous claims wherein the controller is configured to maintain, in the data structure, a stock level attribute associated with each globally unique product identifier and each globally unique vendor identifier;
and wherein the controller is configured to determine the target manufacturing rate for each of the items represented by the globally unique product identifier for each of the plurality of manufacturing facilities represented by a corresponding globally unique node identifier based on the stock level attributes for each of the globally unique vendor identifiers, optionally
wherein in the event that the stock level attribute indicates that the level of stock of a particular item held by a first vendor is above a selected threshold level of surplus stock, and another stock level attribute indicates that the level of stock of the same item held by a second vendor is below a selected threshold level of minimum stock, the controller is configured to provide an indication to the second vendor to obtain stock from the first vendor.

8. The manufacturing system of any of the previous claims wherein the controller is configured to provide a recommendation to at least one (i) a selected one of the manufacturing facilities of items to manufacture based on the consumption attributes associated with the plurality of globally unique product identifiers and associated with the plurality of globally unique vendor identifiers, (ii) a selected one of the vendors of items to stock based on the consumption attributes associated with the plurality of globally unique product identifiers and associated with the plurality of globally unique vendor identifiers, and (iii) a selected one of the manufacturing facilities of when to manufacture a selected item based on the consumption attributes associated with the globally unique product identifiers for that item and associated with the corresponding plurality of globally unique vendor identifiers.

9. The manufacturing system of any of the previous claims wherein the controller is configured to further receive a return attribute associated with a globally unique product identifier and a corresponding globally unique vendor identifier;
and wherein the controller is configured to maintain in the data structure an association between the return attribute, the globally unique product identifier and the corresponding globally unique vendor identifier;
and wherein the controller is configured to determine the globally unique node identifier for the manufacturing facility that manufactured the item corresponding to the globally unique product identifier; and
wherein the controller is configured to maintain in the data structure an association between the return attribute, the globally unique product identifier and the globally unique node identifier, optionally
wherein the controller is configured to provide an alert to a manufacturing facility in the event that the return attribute associated with a globally unique node identifier associated with that manufacturing facility reaches a selected threshold level.

10. A method for controlling the flow of material in a manufacturing process, the method comprising:
maintaining in a data structure a set of data items representing the manufacturing output of a plurality of items from each of a plurality of manufacturing facilities, wherein
each of the plurality of items is represented by a corresponding globally unique product identifier, and
each of the plurality of manufacturing facilities is represented by a corresponding globally unique node identifier;
receiving, from each of a plurality of third parties, a consumption attribute associated with a corresponding globally unique product identifier and associated with a corresponding globally unique vendor identifier, wherein the consumption attribute represents a rate of consumption of the item at a vendor; and
determining a target manufacturing rate, for each of the items represented by the globally unique product identifier for each of the plurality of manufacturing facilities represented by a corresponding globally unique node identifier, based on the consumption attribute; and
maintaining an association between each globally unique product identifier, each globally unique node identifier, and a corresponding respective target manufacturing rate attribute based on the determined target manufacturing rate for each of the items represented by the globally unique product identifier for each of the plurality of manufacturing facilities; and
communicating the corresponding respective target manufacturing rate attribute to each of the plurality of manufacturing facilities.

11. The method for controlling the flow of material in a manufacturing process of claim 10 further comprising:
maintaining, in the data structure, a geographical indication for each globally unique vendor identifier, and a geographical indication for each globally unique node identifier; and
wherein making a determination of a target manufacturing rate for a particular one of the manufacturing facilities is based on the consumption attribute and a comparison of the geographical indication of each globally unique vendor identifier and the geographical indication of each globally unique node identifier.

12. The method for controlling the flow of material in a manufacturing process of claim 10 or 11 further comprising maintaining, in the data structure, a set of raw material attributes corresponding to at least some of the globally unique product identifiers; and
maintaining in the data structure a set of raw material consumption rate attributes associated with each of the raw material attributes based on the consumption attribute for each corresponding globally unique product identifier;
maintaining in the data structure a set of raw material order rate attributes, associated with each raw material attribute and each globally unique node identifier, based on at least one of the corresponding target manufacturing rate attribute and the corresponding raw material consumption rate attribute.

13. The method for controlling the flow of material in a manufacturing process of any of claims 10 to 12 further comprising maintaining, in the data structure, a stock level attribute associated with each globally unique product identifier and each globally unique vendor identifier;
and determining the target manufacturing rate for each of the items represented by the globally unique product identifier for each of the plurality of manufacturing facilities represented by a corresponding globally unique node identifier based on the stock level attributes for each of the globally unique vendor identifiers, optionally
wherein in the event that the stock level attribute indicates that the level of stock of a particular item held by a first vendor is above a selected threshold level of surplus stock, and another stock level attribute indicates that the level of stock of the same item held by a second vendor is below a selected threshold level of minimum stock, providing an indication to the second vendor to obtain stock from the first vendor.

14. The method for controlling the flow of material in a manufacturing process of any of claims 10 to 13 further comprising providing a recommendation to at least one of (i) a selected one of the manufacturing facilities of items to manufacture based on the consumption attributes associated with the plurality of globally unique product identifiers and associated with the plurality of globally unique vendor identifiers, (ii) a selected one of the vendors of items to stock based on the consumption attributes associated with the plurality of globally unique product identifiers and associated with the plurality of globally unique vendor identifiers, and (iii) a recommendation to a selected one of the manufacturing facilities of when to manufacture a selected item based on the consumption attributes associated with the globally unique product identifiers for that item and associated with the corresponding plurality of globally unique vendor identifiers.

15. A computer readable non-transitory storage medium comprising a program for a computer configured to cause a processor to perform the method of any of claims 10 to 14.
